# EUROPEAN PATENT SPECIFICATION

(11) **EP 1 129 040 B1**
(45) Date of publication and mention of the grant of the patent: **05.02.2003**
(21) Application number: 99952705.4
(22) Date of filing: 05.11.1999
(51) Int. Cl.: C03B 29/06, C03B 25/06

(54) **IMPROVEMENTS IN OR RELATING TO MANUFACTURE OF GLASS ARTICLES OR THE LIKE**
VERBESSERUNGEN BEIM HERSTELLEN VON GLASGEGENSTÄNDEN ODER ÄHNLICHEM
AMELIORATIONS EN RAPPORT AVEC LA FABRICATION D'ARTICLES EN VERRE OU ANALOGUES

(30) Priority: 05.11.1998 GB 9824305
(43) Date of publication of application: 05.09.2001
(73) Proprietor: STEIN ATKINSON STORDY LIMITED, Wombourne Wolverhampton, WV5 8BY (GB)
(72) Inventor: MILLS, Brian, NR Ludlow, Shropshire SY8 3QY (GB)
(74) Representative: Croston, David
(86) International application number: GB9903659
(87) International publication number: WO00027765

(56) References cited:
- GB-A- 2 300 906

## Description

This invention relates to improvements in or relating to manufacture of glass articles or the like and is more particularly but not exclusively concerned with heat treatment of Cathode Ray Tubes (CRT).

Our previous patent specification No.GB2300906 relates to a heat treatment oven used in the manufacture of Cathode Ray Tubes, including heater means for heating a fluid medium in the oven, and temperature control means for regulated heating and/or cooling of the fluid medium inside the oven.

Although the previous oven design shown in patent specification No.GB2300906 works well in practice with the type of Cathode Ray Tubes as shown in the drawings of that patent specification and indeed for various other large glass items, it tends not to be generally suitable for treatment of other glass articles or the like such as the new designs of flatter, thinner Cathode Ray Tubes (Thin CRT) now being designed for incorporation in domestic higher definition "flat screen" television receivers e.g. as produced by Candescent Technology Corporation of U.S.A.

In attempting to use such an oven design for said flatter Cathode Ray Tubes, a much closer control over the temperature of the Cathode Ray Tubes being heat treated is required over time in order to avoid the occurrence of stress lines, cracking or breaking of the Cathode Ray Tubes. Also, a closer control of the temperature of the article being heat treated in the oven may be necessary for articles other than Cathode Ray Tubes.

It is an object of the present invention to at least alleviate the aforementioned, or other, problem associated with heat treatment of glass articles or the like or any articles which may be subject to stress or breakage if not heat treated in an appropriate manner.

According to the present invention there is provided apparatus as defined in claim 1.

Thus, use of the first and second control means may effectively provide a dual control facility for the oven. The first and second control may be arranged to be automatically co-operable with one another e.g. under the control of a computer.

Preferably, the velocity of the fluid medium can be varied by the second control means in response to the temperature of the glass article/s in the oven; the apparatus, preferably, includes sensor means for sensing the temperature of the glass article or articles (said sensor means possibly being a pyrometer) and/or may include automatic means for selectively varying the temperature and/or velocity of the fluid medium in response to the temperature sensed by said sensor means. Alternatively, separate sensor means may be provided for sensing the temperature of the fluid medium in order to control the output of the heater means. Said automatic control means may include a purpose-made programmed computer system.

The apparatus will usually include a fan or impeller to circulate or re-circulate the fluid medium around the article or articles.

The apparatus may include baffle wall portions to help direct the fluid medium over the article or articles in a controlled way.

The output of the heater means (which may be for example a gas burner or electrical element or any suitable heater means) may be varied in response to the temperature of the fluid medium being circulated/re-circulated and the location for sensing the temperature may be relatively near to the article or articles being heat treated or at any suitable point and there may be more than one sensing point. In any event, the sensing signal may be set to control the heater means via a P.I.D. control.

The sensor means for sensing the temperature of the glass article or articles may be connected via a P.I.D. control and/or an invertor to control velocity of the air being recirculated in the oven for example by a, or the, fan or impeller.

The oven may be divided up into a plurality of chambers or zones and the number of zones will usually depend upon the nature of the articles being heat treated.

Where the glass articles or the like being heat treated are Cathode Ray Tubes of a very flat nature, preferably, said tubes are stacked vertically (or generally upright) in parallel fashion (preferably in two rows) in a vacuum cart that can be progressed through the zones or chamber of the oven. The oven may be generally of a race-track shape.

In such an arrangement, the fluid medium is, preferably, introduced in between the Cathode Ray Tubes by nozzles preferably angled to direct said fluid medium horizontally between said Cathode Ray Tubes. The faces or screens of the Cathode Ray Tubes, preferably, face one another although they may be arranged in front to back opposing relationship. Preferably, the oven has a number of chambers or zones less than 50 and preferably less than 20, preferably less than 10 and possibly only 8 zones.

Preferably, the oven is provided with a track which allows a series of vacuum carts containing the Cathode Ray Tubes to progress through the various zones of the oven.

As many as 40 Cathode Ray Tubes may be provided per vacuum cart.

Each chamber or zone may be provided with horizontal baffle wall portions in an upper portion of the chamber in order to direct fluid medium horizontally at the top of a chamber/zone towards the sides and vertical baffle wall portions to direct the air downwardly at each side to nozzle means introducing the fluid medium over the glass articles.

Preferably, the apparatus has provision for allowing not more than a ± 5° celsius variation from an ideal temperature gradient for heat treatment of the glass article or articles.

Further according to the present invention there is provided a method of heat treatment of glass articles or the like, comprising heat treating said articles under a dual control comprising controlling the heat output of a heater means and the velocity of fluid medium being circulated or recirculated in a chamber or zone of the oven. The method, preferably, includes sensing the temperature of the glass article or the like in order to vary the velocity of the fluid medium being circulated/re-circulated in said chamber or zone and the heat output of the heater means is, preferably, controlled by sensor sensing the temperature of said fluid medium.

Where the glass articles are flat Cathode Ray Tubes, preferably, said method comprises heat treating a plurality of said Cathode Ray Tubes which are, preferably, positioned vertically and parallel to one another on vacuum carts that proceed through a plurality of zones of the oven, preferably in a time indexed manner; said fluid medium, preferably, being directed (preferably horizontally) in between the Cathode Ray Tubes during the heat treatment process.

In said method, the indexing time between zones is, preferably, at least 10 minutes but may be 12 or 16 minutes.

Many advantageous apparatus and method features will be apparent from the following description and drawings.

An embodiment of apparatus and method for the heat treatment of glass articles or the like is now described, by way of example only, with reference to the accompanying much simplified FIGURES of the drawings, in which:-
FIGURE 1 shows a vertical cross-sectional view through an oven of apparatus in accordance with the present invention;
FIGURE 2 shows a sectional part-elevation plan view of the oven shown in FIGURE 1, and
FIGURE 3 shows graphical data relating to the heat treatment method in accordance with the present invention.

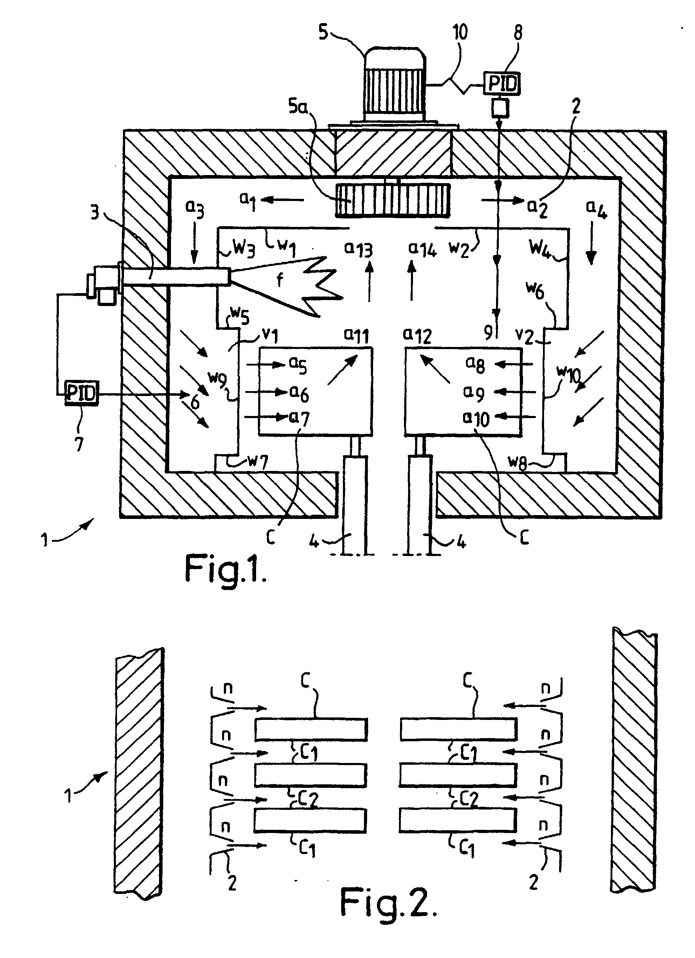

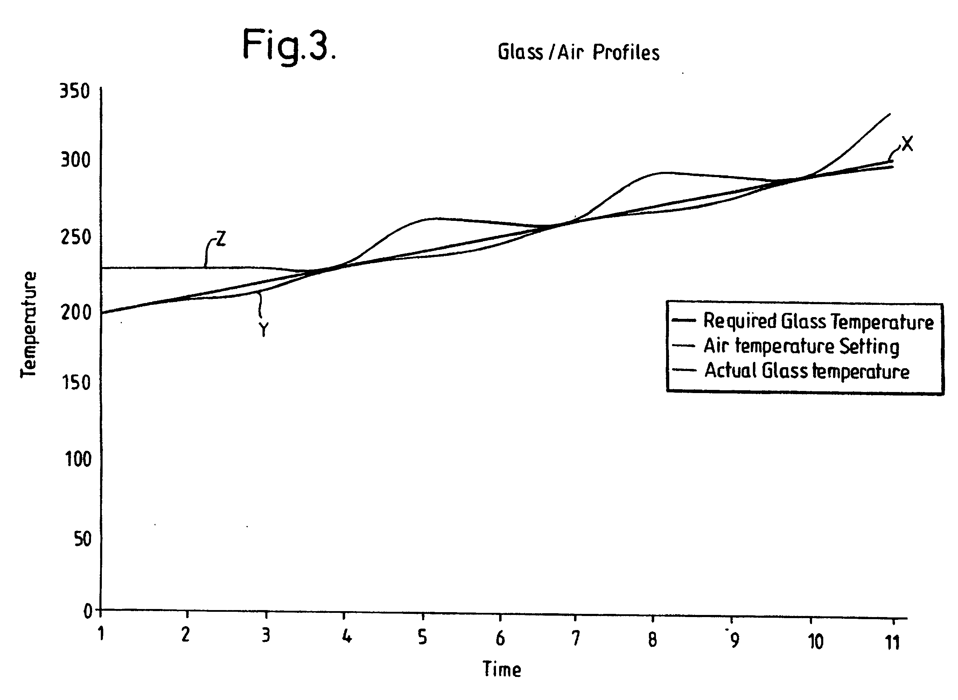

Referring to FIGURES I and 2 of the drawings, apparatus for heat treatment of glass articles or the like (in this instance a plurality of flat Cathode Ray Tubes C) is in the form of a heat treatment oven 1. The oven 1 defines a plurality of inner chambers or zones 2 (only one zone shown) for receiving the Cathode Ray Tubes C stacked in two rows and vertically oriented with the front faces or screens C₁ of the tubes C facing one another, more particularly as shown in FIGURE 2. Although FIGURE 2 shows only two rows of three Cathode Ray Tubes C, in practice, there may be twenty Cathode Ray Tubes C in each row mounted in a single vacuum cart (not shown) which is able to move through different control chambers or zones 2 of the oven 1, in a manner similar to that as described in patent specification No.GB2300906. Thus, the overall shape of the oven 1 may be similar to the general race-track shape as shown in FIGURE 3 of patent specification No.GB2300906, except that. advantageously, it is envisaged that far fewer control chambers or zones 2 will be needed through which the vacuum cart carrying the Cathode Ray Tubes C needs to travel in order to complete the heat treatment process. Previously, in order to complete the heat treatment process on Cathode Ray Tubes of the design as shown in patent specification No.GB2300906, as many as fifty different control chambers or zones were needed to be provided for the vacuum carts to advance through, along the general race-track shape of the oven. Advantageously, the Cathode Ray Tubes C as shown in FIGURES 1 & 2 of the drawings may only need to be subjected to about eight control chambers or zones and they will spend longer time periods in the zones than in said previous design, in a manner to be explained later on in this specification.

The oven 1 includes for each zone or chamber 2 a heating means in the form of a gas burner or electric element 3 and the fluid medium (air) in the zone or chamber 2 is circulated or re-circulated around the zone or chamber in the direction of the arrows and particularly in between the Cathode Ray Tubes C (arrows a₅ to a₁₀) in a manner which should be generally self-explanatory from FIGURES 1 and 2 of the drawings.

A train of vacuum carts (not shown) each containing forty Cathode Ray Tubes C can be advanced sequentially through the different chambers or zones 2 of the oven 1 on a track (not shown) which may be of the general race-track form shown in FIGURE 3 of GB patent specification No.2300906, in a manner which should be readily appreciated. Each Cathode Ray Tube C is supported on an exhaust duct 4 operatively connected to the envelope of the Cathode Ray Tube C so that the Cathode Ray Tubes C are transported through the chambers or zones of the oven 1 with a vacuum cart. During transport through the oven 1, the vacuum carts can be operated automatically in a manner known per se to exhaust the interior of each of the Cathode Ray Tubes C.

The general form of the oven could be similar to that as described in GB patent specification No.GB2300906 with loading and unloading stations (not shown) provided along part of the outside structure of the track.

The air within each zone or chamber 2 may be re-circulated by a fan or impeller 5 including a fan blade unit 5a arranged to rotate about a vertical axis in order to direct air outwardly and horizontally in direction of the arrows a₁ and a₂ directed by the presence of horizontal baffle wall portions W₁ & W₂ before being forced downwardly in direction of arrows a₃ and a₄. The air flow in the direction of arrows a₃ and a₄ is directed by the presence of vertical baffle wall portions W3 and W4, before collecting towards the bottom of the chamber in the larger volume compartments v₁ and v₂ defined in part by horizontal wall portions w₅, w₆, w₇, w₈ and vertical wall portions w₉, w₁₀; the air is then forced through a series of horizontally directed nozzle n (in direction of arrows a₅, a₆, a₇, a₈, a₉ and a₁₀) in between the opposed front faces C₁ of the Cathode Ray Tubes and in between the opposed rear faces C₂, in a manner which should be self-evident from the drawings. Next, the air flows generally in the direction of arrows a₁₁ and a₁₂ and upwardly in direction of arrows a₁₃ and a₁₄ past the burning flame f of the heating means (in this instance gas burner 3) in order to be heated and re-circulated by the fan 5.

Each Cathode Ray Tube C may have a length dimension of approximately 300mm and a width dimension of approximately 15mm, said width dimension being very much thinner than, for example, the Cathode Ray Tubes shown in patent specification No.GB2300906. Consequently, the control of the heat treatment process needs to be much more accurate or otherwise the Cathode Ray Tubes will be subject to excess stress or damage, namely cracking or breaking of the glass screen.

In the previous oven mentioned in patent specification No.GB2300906, air is forced downwardly over the upwardly oriented front screen or face of a single Cathode Ray Tube per cart, in a heating zone of the oven and then the air is drawn-up through exhaust ducts in side walls of the oven. Each Cathode Ray Tube needs to be brought through a heat treatment cycle in which the temperature of the glass is raised at a steady rate for a set time period, kept at that temperature for a further time period and allowed to cool down steadily within a further set time period. Variations from the desired C.R.T. temperature gradient through the oven needs to be kept within various limits or tolerances, in order to avoid damage to the Cathode Ray Tubes. Regulation of the zone environment is made by monitoring and controlling the air temperature via the heating means, whereas in the present invention the output of the heating means to heat the air can be adjusted in order to vary the temperature of the air and thus of the Cathode Ray Tubes but, additionally, the velocity of the air circulating around the oven zone can also be controlled by varying the speed of the fan 5. Thus, for the first time a dual control facility exists within the oven zone, namely control of the heating means and control of the velocity of the fan (to separately control the velocity of the circulating air) in order to add an extra dimension of control allowing finer tolerances in the temperature gradient for the glass to be exacted. The output of the heating means 3 is controlled by sensing the temperature of the air by means of a sensor (not shown) located generally at 6 in FIGURE 1, being controlled by means of a P.I.D. control input 7. A second P.I.D. control 8 enabling said dual control to be carried out is established by means of measuring or monitoring the temperature of the glass of the Cathode Ray Tubes C by means of a sensor located generally at position 9, so that the velocity of the fan 5 can be controlled via an inverter 10.

It is envisaged that the complete heat treatment cycle of the Cathode Ray Tubes C will be continuously monitored and controlled via a purpose made computerised system suitably programmed to ensure that the temperature of the Cathode Ray Tubes throughout the cycle does not vary from the desired temperature gradients more than the allowed tolerance range, which will usually be within ± 5 degrees.

FIGURE 3 shows an example of a temperature gradient for part of a heating cycle for a Cathode Ray Tube C. FIGURE 3 shows a heating rate of 20 degrees celsius to 223 degrees celsius set as a linear function. Temperature steps may then be set in incremental set points of for example 40 degrees celsius steps. FIGURE 3 shows the theoretical desired glass temperature gradient X for a first part of the heating cycle on which is superimposed the actual temperature Y of the glass of the Cathode Ray Tube C and the air temperature setting Z. When the temperature of the glass is found to be below the theoretical required glass temperature at a particular point in time the velocity of the re-circulating air is increased by increasing the speed of the fan 5, thereby increasing the heat transfer co-efficient, or if the temperature of the glass is above the desired glass temperature gradient X the velocity of the fan can be decreased, thus giving a fine control band. FIGURE 3 shows that there is much greater variation in the air temperature setting from the desired glass temperature and thus, advantageously, the control of the air speed is determined by sensing the glass temperature (directly) rather than for example, sensing the air temperature. However, control of the output from the heating means 4 is done by sensing the air temperature at 6.

It is also an advantage of embodiments of the present invention that less floor space may be required for the oven 1 than in previous oven designs needing for example 50 zones in order to achieve a similar heat treatment cycle. Additionally, the power requirements of the apparatus in accordance with the present invention may well be much better than with previous designs. Still further, the apparatus 1 should be able to provide a much quicker response to a variation in temperature of a Cathode Ray Tube because of the dual facility for temperature control, in particular the velocity of the re-circulating air being controlled in response to the temperature of the glass. In the previous arrangement shown in patent specification No.GB2300906, the usual indexing time is between 20 and 35 seconds (the amount of time spent by a vacuum cart in each zone before being indexed to the next zone) whereas it is envisaged with embodiments in accordance with the present invention that the indexing time may well be 12-16 minutes.

Overall, therefore, embodiments of the present invention may be extremely advantageous in manufacturing items such as flat Cathode Ray Tubes that need to be brought through a heat treatment cycle but which are subject to stress, breakage or cracking if not heat treated in a readily controllable manner. Thus, such articles may be of glass or the like but could be of any other material where such problems might exist or where the article needs to be brought through a very precisely controlled heat treatment process.

It is to be understood that the scope of the present invention is not to be unduly limited by the particular choice of terminology and that a specific term may be replaced by any equivalent or generic term. For example the term "Cathode Ray Tube" may be replaced by "television receiver" or television tube/screen or the like. The term "computer" may be replaced by "microprocessor". The singular may include the plural or vice versa.

Further it is to be understood that individual features, method or functions related to the apparatus might be individually patentably inventive. In particular, any disclosure in this specification of a range for a variable or parameter shall be taken to include a disclosure of any selectable or derivable sub-range within that range and shall be taken to include a disclosure of any value for the variable or parameter lying within or at an end of a range.

Further according to the present invention there is provided an article or C.R.T. heat treated using apparatus in accordance with any apparatus statement of invention in this specification or made by any method statement of invention in this specification.

## Claims

1. An apparatus for heat treatment of glass articles or the like comprising an oven (1) for receiving one or more glass articles or the like (C), heater means (3) for heating a fluid medium which is introduced, in use, to an article or articles in the oven, the fluid medium being circulated or recirculated around the article or articles in order to heat up said article or articles in a closely controlled manner by the use of first and second control means (7,8), the first control means (7) being arranged, in use, to vary the temperature of a fluid medium and the second control means (8) being arranged, in use, to vary the velocity of a fluid medium introduced to said article or articles (C).

2. An apparatus according to claim 1 in which the first and second control means (7,8) are arranged to co-operate with one another automatically.

3. An apparatus according to claim 1 or 2 in which the second control means (8) varies the velocity of the fluid medium in response to the temperature of the glass article or articles in the oven.

4. An apparatus according to claim 1, 2 or 3 in which sensor means is provided for sensing the temperature of the glass article or articles.

5. An apparatus according to claim 4 in which the sensor is a pyrometer.

6. An apparatus according to claim 4 or 5 in which automatic means is provided for selectively varying the temperature and/or velocity of a fluid medium in response to the temperature sensed by the sensor means.

7. An apparatus according to claim 1, 2 or 3 in which fluid temperature sensor means is provided for sensing the temperature of the fluid medium in order to control the output of the heater means.

8. An apparatus according to any preceding claim in which an impeller (5) is provided to circulate or recirculate fluid medium around the articles.

9. An apparatus according to any preceding claim in which baffle wall portions (W) are provided to help direct fluid medium over the article or articles in a controlled way.

10. An apparatus according to any preceding claim in which the output of the heater means (3) is variable in response to temperature of the fluid medium being circulated or recirculated.

11. An apparatus according to claim 10 in which a fluid medium temperature sensor is provided near to the article or articles being heat treated.

12. An apparatus according to claim 11 in which the signal from the fluid medium temperature sensor controls the heater means via a P.I.D. control (7).

13. An apparatus according to claim 4 in which the sensor means for sensing the temperature of the glass article or articles is connected via a P.I.D. control to control velocity of the air being recirculated in the oven.

14. A method of heat treatment of glass articles or the like comprising heat treating said articles in a closely controlled manner under dual control comprising controlling the heat output of a heater means (3) and the velocity of fluid medium being circulated or recirculated in a chamber or zone of an oven (1).

15. A method according to claim 14 in which the method includes sensing the temperature of the glass article or the like so as to vary the velocity of fluid medium being circulated.

16. A method according to claim 14 or 15 in which the heat output of the heater means (3) is controlled by a sensor sensing the temperature of the fluid medium.

17. A method according to claim 14, 15 or 16 and where the glass articles are flat Cathode Ray Tubes (c), the method comprising positioning Cathode Ray Tubes vertically and parallel to one another on a vacuum cart proceeding through the plurality of zones of an oven and heat treating said plurality of Cathode Ray Tubes and by directing heated fluid medium in-between Cathode Ray Tubes of said plurality of Cathode Ray Tubes.

18. A method according to claim 17 in which the vacuum carts proceed through a plurality of zones of the oven in a time indexed manner, the indexing time between the zones being at least 10 minutes.

## Patentansprüche

1. Gerät zur Wärmebehandlung von Glaswaren oder ähnlichem, bestehend aus einen Ofen (1) zur Aufnahme von einer Glasware oder mehreren Glaswaren oder ähnlichem (C), Heizer (3) zum Erwärmen eines Fluidums, das im Gebrauch an eine Ware oder Waren im Ofen geleitet wird, wobei das Fluidum um die Ware oder Waren herum zirkuliert oder rezirkuliert wird, um diese Ware oder Waren in einer genau geregelten Art und Weise durch Gebrauch eines ersten und zweiten Reglers (7, 8) aufzuheizen, wobei der erste Regler (7) angebracht wird, um im Gebrauch die Temperatur eines Fluidums zu verändern, und wobei der zweite Regler (8) angebracht wird, um im Gebrauch die Geschwindigkeit eines Fluidums zu verändern, das an die Ware oder Waren (C) geleitet wird.

2. Gerät nach Anspruch 1, wobei der erste und zweite Regler (7, 8) so angeordnet sind, dass sie miteinander automatisch zusammenarbeiten.

3. Gerät nach Anspruch 1 oder 2, wobei der zweite Regler (8) die Geschwindigkeit des Fluidums in Abhängigkeit von der Temperatur der Glasware oder der Glaswaren im Ofen verändert.

4. Gerät nach Anspruch 1, 2 oder 3, wobei ein Sensor für das Fühlen der Temperatur der Glasware oder -waren sorgt.

5. Gerät nach Anspruch 4, wobei der Sensor ein Pyrometer ist.

6. Gerät nach Anspruch 4 oder 5, wobei ein Automat für eine selektive Veränderung der Temperatur und/oder der Geschwindigkeit eines Fluidums in Abhängigkeit von der von einem Sensor gefühlten Temperatur sorgt.

7. Gerät nach Anspruch 1, 2 oder 3, wobei ein Fluidtemperatursensor für das Fühlen der Temperatur des Fluidums sorgt, um die Ausgangsleistung des Heizers zu regeln.

8. Gerät nach einem der voranstehenden Ansprüche, wobei ein Flügelrad (5) vorgesehen ist, um das Fluidum um die Waren herum zu zirkulieren oder rezirkulieren.

9. Gerät nach einem der voranstehenden Ansprüche, wobei Umlenkbleche (W) vorgesehen sind, die helfen, Fluidum in geregelter Weise an die Ware oder Waren zu lenken.

10. Gerät nach irgendeinem voranstehenden Anspruch, wobei die Ausgangsleistung des Heizers (3) in Abhängigkeit von der Temperatur des zirkulierten oder rezirkulierten Fluidums veränderbar ist.

11. Gerät nach Anspruch 10, wobei ein Fluidtemperatursensor in der Nähe der Ware oder Waren, die wärmebehandelt werden, bereitgestellt ist.

12. Gerät nach Anspruch 11, wobei das Signal des Fluidtemperatursensors den Heizer mittels einen PID-Reglers (7) regelt.

13. Gerät nach Anspruch 4, wobei der Sensor zum Fühlen der Temperatur der Glasware oder -waren über einen PID-Regler verbunden ist, um die Geschwindigkeit der im Ofen rezirkulierenden Luft zu steuern.

14. Verfahren zur Wärmebehandlung von Glaswaren oder ähnlichem, bestehend aus Wärmebehandlung der Waren in einer genau geregelten Art und Weise unter zweifacher Regelung, bestehend aus Regelung der Heizleistung eines Heizers (3) und der Geschwindigkeit eines Fluidums, das in einer Kammer oder Zone eines Ofens (1) zirkuliert oder rezirkuliert wird.

15. Verfahren nach Anspruch 14, wobei das Verfahren das Fühlen der Temperatur der Glasware oder ähnlichem umfasst, um auf diese Weise die Geschwindigkeit des zirkulierenden Fluidums zu verändern.

16. Verfahren nach Anspruch 14 oder 15, wobei die Heizleistung des Heizers (3) durch einen Sensor geregelt wird, der die Temperatur des Fluidums fühlt.

17. Verfahren nach Anspruch 14, 15 oder 16, wobei die Glaswaren flache Kathodenstrahlröhren (C) sind, bestehend aus Positionierung der Kathodenstrahlröhren vertikal und parallel zueinander auf einem Vakuumförderwagen, der sich durch eine Vielzahl von Zonen eines Ofens bewegt, und Wärmebehandlung der Vielzahl von Kathodenstrahlröhren und der Leitung von erwärmten fließenden Mediums zwischen Kathodenstrahlröhren der Vielzahl von Kathodenstrahlröhren.

18. Verfahren nach Anspruch 17, wobei die Vakuumförderwagen sich in einer zeitindizierten Art und Weise durch eine Vielzahl von Zonen des Ofens bewegen, wobei die Indexzeit wenigstens 10 Minuten beträgt.

## Revendications

1. Appareil pour le traitement thermique d'articles en verre ou analogues, comprenant un four (1) destiné à recevoir un ou plusieurs articles en verre ou analogues (C), un moyen de chauffage (3) pour chauffer un milieu fluide qui, en fonctionnement, est introduit dans le four vers un article ou des articles, le milieu fluide circulant ou recirculant autour de l'article ou des articles de façon à chauffer ledit article ou lesdits articles d'une façon étroitement contrôlée par utilisation d'un premier et d'un second moyens de contrôle (7, 8), le premier moyen de contrôle (7) étant conçu, en fonctionnement, pour faire varier la température d'un milieu fluide et le second moyen de contrôle (8) étant conçu, en fonctionnement, pour faire varier la vitesse d'un milieu fluide introduit vers ledit article ou lesdits articles (C).

2. Appareil selon la revendication 1, dans lequel les premier et second moyens de contrôle (7, 8) sont conçus pour coopérer automatiquement l'un avec l'autre.

3. Appareil selon la revendication 1 ou 2, dans lequel le second moyen de contrôle (8) fait varier la vitesse du milieu fluide en réponse à la température de l'article en verre ou des articles en verre dans le four.

4. Appareil selon la revendication 1, 2 ou 3, dans lequel un moyen capteur est prévu pour capter la température de l'article en verre ou des articles en verre.

5. Appareil selon la revendication 4, dans lequel le moyen capteur est un pyromètre.

6. Appareil selon la revendication 4 ou 5, dans lequel est prévu un moyen automatique pour faire varier de façon sélective la température et/ou la vitesse d'un milieu fluide en réponse à la température captée par le moyen capteur.

7. Appareil selon la revendication 1, 2 ou 3, dans lequel un moyen capteur de la température de fluide est prévu pour capter la température du milieu fluide afin de contrôler la sortie du moyen de chauffage.

8. Appareil selon l'une quelconque des revendications précédentes, dans lequel est prévu un impulseur (5) pour faire circuler ou recirculer le milieu fluide autour des articles.

9. Appareil selon l'une quelconque des revendications précédentes, dans lequel des portions de paroi déflectrice (W) sont prévues pour aider à diriger de façon contrôlée le milieu fluide sur l'article ou les articles.

10. Appareil selon l'une quelconque des revendications précédentes, dans lequel la sortie du moyen de chauffage (3) peut varier en réponse à la température du milieu fluide en cours de circulation ou de recirculation.

11. Appareil selon la revendication 10, dans lequel un capteur de la température du milieu fluide est prévu à proximité de l'article ou des articles en cours de traitement thermique.

12. Appareil selon la revendication 11, dans lequel le signal provenant du capteur de la température du milieu fluide contrôle le moyen de chauffage par l'intermédiaire d'un contrôle P.I.D. (7).

13. Appareil selon la revendication 4, dans lequel le moyen capteur destiné à capter la température de l'article ou des articles en verre est connecté par l'intermédiaire d'un contrôle P.I.D. pour contrôler la vitesse de l'air en cours de recirculation dans le four.

14. Procédé de traitement thermique d'articles en verre ou analogues, comprenant le traitement thermique des dits articles d'une façon étroitement contrôlée sous un double contrôle comprenant le contrôle de la sortie de chaleur d'un moyen de chauffage (3) et de la vitesse d'un milieu fluide en cours de circulation ou de recirculation dans une chambre ou zone d'un four (1).

15. Procédé selon la revendication 14, qui comprend l'opération de capter température de l'article en verre ou analogue, de façon à faire varier la vitesse du milieu fluide en cours de circulation.

16. Procédé selon la revendication 14 ou 15, selon lequel la sortie de chaleur du moyen de chauffage (3) est contrôlée par un capteur qui capte la température du milieu fluide.

17. Procédé selon la revendication 14, 15 ou 16 et selon lequel les articles en verre sont des tubes à rayons cathodiques plats (c), le procédé comprenant les opérations consistant à positionner les tubes à rayons cathodiques verticalement et parallèlement les uns aux autres sur un chariot à vide se déplaçant à travers la pluralité de zones d'un four, et à traiter thermiquement ladite pluralité de tubes à rayons cathodiques en dirigeant le milieu fluide chauffé dans l'intervalle entre les tubes à rayons cathodiques de la pluralité de tubes à rayons cathodiques.

18. Procédé selon la revendication 17, dans lequel les chariots à vide se déplacent à travers une pluralité de zones du four d'une façon indexée sur le temps, le temps d'indexage entre les zones étant d'au moins 10 minutes.
